Europäisches Patentamt

European Patent Office

Office européen des brevets

(19)

(11) Veröffentlichungsnummer: **0 204 159**
**B1**

(12) **EUROPÄISCHE PATENTSCHRIFT**

(45) Veröffentlichungstag der Patentschrift:
28.12.88

(21) Anmeldenummer: 86106087.9

(22) Anmeldetag: 02.05.86

(51) Int. Cl.⁴: **F 16 B 13/04**

㊺ **Dübel.**

(30) Priorität: 07.05.85 DE 3516343

(43) Veröffentlichungstag der Anmeldung:
10.12.86 Patentblatt 86/50

(45) Bekanntmachung des Hinweises auf die Patenterteilung:
28.12.88 Patentblatt 88/52

(84) Benannte Vertragsstaaten:
AT BE CH FR GB IT LI NL SE

(56) Entgegenhaltungen:
CH-A- 608 866
CH-A- 635 172
DD-A- 131 578
DE-A- 2 846 070

(73) Patentinhaber: fischerwerke Artur Fischer GmbH & Co.
KG, Weinhalde 14-18,
D-7244 Tumlingen/Waldachtal 3 (DE)

(72) Erfinder: Fischer, Artur, Dr. h. c., Weinhalde 34,
D-7244 Tumlingen/Waldachtal 3 (DE)

## Beschreibung

Die Erfindung betrifft einen Dübel für Befestigungen an Platten, Hohlwänden und dgl. einerseits und Vollbaustoffen andererseits, bestehend aus einem eine Längsbohrung mit Innengewinde oder Innenrippen versehenen Schaft, sowie zwei davon ausgehenden Schenkel die über ein mit einem Flansch und Drehsicherungsmittel versehenen, ebenfalls eine Längsbohrung aufweisenden Kopfteil zusammengehalten sind.

Es sind eine Reihe von Dübeln der obengenannten Art bekannt, deren Einsatz sowohl in Hohlwänden als auch in Vollbaustoffen vorgesehen sind. In der Regel weisen solche Dübel mehr als zwei Schenkel auf. Wegen der geringen Torsionssteifigkeit dieser Schenkel wird beim Eindrehen einer Schraube in die Längsbohrung des Schaftes eine Verdrehung erreicht, die durch das sich Übereinanderlegen der Schenkel zu einer Wulstbildung führt. Um eine gleichmässige Wulstbildung zu erreichen, ist in der Regel ein sehr weiches Kunststoffmaterial für den Dübel erforderlich. Dies führt einerseits zu einem leichten Überdrehen der Schraube in der Längsbohrung des Schaftes, so dass nur ein geringes Anzugsmoment für die Befestigung eines Gegenstandes erreicht werden kann, und hat zum anderen den Nachteil, dass bei einem Einsatz des Dübels in Vollbaustoffen wegen des weichen Kunststoffmaterials keine hohen Haltewerte erzielbar sind. Darüberhinaus sind die Langzeitwerte der Befestigung wegen der ungünstigeren Fliesseigenschaft des weichen Kunststoffes für hochwertige Befestigungen unzureichend.

Der Erfindung liegt die Aufgabe zugrunde, einen Dübel für Befestigungen sowohl an Platten, Hohlwänden und dgl. als auch für Vollbaustoffe zu schaffen, der die Verwendung eines hochwertigeren Kunststoffes und damit höhere Haltewerte insbesondere im Vollbaustoff zulässt.

Erfindungsgemäss wird dies dadurch erreicht, dass die beiden zueinander weisenden Flächen der Schenkel in Fortsetzung der Längsbohrung des Kopfteiles mindestens über die Hälfte der Schenkellänge mit Längsrillen versehen sind, und dass sich daran ein Spalt anschliesst, dessen lichte Weite geringer ist als die lichte Weite der Längsbohrung im Schaft.

Bei der Verwendung des erfindungsgemässen Dübels für Befestigungen an Platten, Hohlwänden und dgl. wird dieser durch Eindrehen der Befestigungsschraube in die Längsbohrung des Schaftes unter radialem Ausknicken der beiden Schenkel axial zusammengefaltet. Dabei ergibt sich an der Rückseite der Platte eine als Gegenlager wirkende Abstützung, so dass die Verspannung eines Gegenstandes zu dessen Befestigung möglich ist. Durch die über einen Teil der Länge der Schenkel verlaufenden Längsrillen ist die Schraube bis zum Spaltanfang ungehindert einschiebbar. Die gegenüber dem Kerndurchmesser der Schraube geringe lichte Weite des Spaltes bewirkt beim Eindringen der Schraube in den Spalt ein Ausknicken der Schenkel, so dass zum Einziehen des Schaftes aufgrund der Vorknickung geringere Kräfte zum vollständigen Ausknicken der Schenkel erforderlich sind.

Beim Einsatz des Dübels in Vollbaustoffen wird der Dübel in ein dem Aussendurchmesser des Schaftes bzw. des Kopfteiles entsprechendes Bohrloch eingeschlagen. Die Schraube ist wiederum bis zum Spaltanfang einschiebbar. Bei weiterem Eindrehen der Schraube werden die beiden mit der Spaltverengung versehenen Schenkelteile gegen die Bohrlochwandung gepresst, so dass durch entsprechende Verdrängung und Verkeilung des Dübelmaterials im Bohrloch hohe Haltewerte erzielt werden. Die Wirkungsweise des Dübels in einem Vollbaustoff entspricht somit den bekannten, im wesentlichen für Vollbaustoffe vorgesehenen Spreizdübeln. Da für die Verankerung des Dübels in Platten und Hohlwänden keine Wulstbildung durch Verdrehen der Schenkel, sondern lediglich ein Ausknicken erforderlich ist, kann der Dübel aus einem hochfesten Kunststoff hergestellt werden, so dass bei der Plattenmontage ein Durchdrehen der Schraube verhindert ist und in Vollbaustoffen hohe Halterwerte erzielbar sind.

In einer weiteren Ausgestaltung der Erfindung kann die Querschnittskontur der beiden Schenkel im Bereich des Spaltanfanges eine Ellipse bilden, die zum Schaft hin in einen Kreisquerschnitt übergeht.

Durch die ellipsenförmige Verdickung der Schenkel wird der Dübel im Vollbaustoff auf den Durchmesser des Bohrloches zusammengedrückt und dabei der Spalt zwischen den beiden Schenkeln noch weiter verengt. Damit wird die Verkeilung des Dübels verstärkt, was wiederum zu höheren Haltewerten führt.

In einer weiteren Ausgestaltung der Erfindung kann vom Kopfteil aus gesehen zwischen dem Ende der Längsrillen und dem Spaltanfang eine in Spaltebene verlaufende Querschnittsschwächung, vorzugsweise in Form einer Querbohrung, angeordnet sein. Mit dieser Querschnittsschwächung wird die Knickstelle beim Aufspreizen ins Freie vorbestimmt. Damit genügen schon geringe, über die Schraube in den Schaft eingeleitete Zugkräfte, um das Ausknicken zu ermöglichen. Diese zusätzliche Ausknickhilfe ist insbesondere für die Verwendung in Gipskartonplatten zweckmässig, da in solchen Platten das Kopfteil nur ein geringes Drehmoment aufnehmen kann.

Eine weitere Verbesserung der Ausknickfähigkeit des Dübel ergibt sich durch die weitere Ausgestaltung der Erfindung, wonach im Bereich der Anbindung der Schenkel an den Schaft rechtwinklig zur Spaltebene verlaufende, den Querschnitt schwächende Kerben angeordnet sein können.

Schliesslich kann in weiterer Ergänzung der Erfindung der Spalt sich V-förmig zum Schaft hin verengen. Diese insbesondere in Kombination mit der Querschnittsverdickung zweckmässige Ausgestaltung sorgt für eine bereits nach aussen gerichtete Vorknickung, die bei der Plattenmontage die Zugkraft zum Ausknicken vermindert. Bei der Montage im Vollbaustoff wird der V-förmig sich verengende Spalt durch die Verdickung soweit zusammengedrückt, dass die Spaltflächen etwa parallel verlaufen.

In der Zeichnung ist ein Ausführungsbeispiel der Erfindung dargestellt.

Es zeigen:

Figur 1 den erfindungsgemässen Dübel

Figur 2 die Befestigung eines Gegenstandes an einer Platte mit dem Dübel

Figur 3 die Befestigung eines Gegenstandes an einem Vollbaustoff mit dem Dübel.

Der Dübel 1 besteht aus dem Schaft 2, der eine Längsbohrung 3 mit Innenrippen 4 aufweist, und den beiden vom Schaft 2 ausgehenden Schenkel 5, die durch das Kopfteil 6 zusammengehalten sind. An dem Kopfteil 6 ist als Durchschiebsicherung ein rechtwinklig abstehender Flansch 7 und als Drehsicherung Rippen 8 angeordnet, die in die Bohrlochwandung eingreifen. Die Querschnittskontur der Schenkel 5 im Bereich des Spaltanfanges bildet eine Ellipse, die zum Schaft 2 hin in einen Kreis übergeht. Der kleine Ellipsendurchmesser entspricht dabei etwa dem Bohrlochdurchmesser. Der vom Kopfteil 6 bis zum Schaft 2 sich erstreckende Spalt 9 trennt die beiden Schenkel 5, wobei die Spaltflächen der vom Kopfteil 6 ausgehenden Schenkelteile etwa bis zur Mitte der Schenkel in Fortsetzung der Einsatzbohrung 10 mit Längsrillen 3a versehen sind. Der Spalt 9a setzt sich dann ohne Längsrillen bis zum Schaft 2 fort, wobei die lichte Weite des Spaltes 9a geringer ist als der Kerndurchmesser der Schraube 11. Zusätzlich kann dieser Teil des Spaltes 9a so gestaltet sein, dass er sich V-förmig zum Schaft 2 hin verengt. Diese V-förmige Verengung ist insbesondere in Kombination mit der ellipsenförmigen Verdickung 12 der Schenkel 5 zweckmässig, die zum Schaft 2 hin in einen Kreisquerschnitt übergeht.

Um das Ausknicken zu erleichtern, ist im Bereich der Verdickung 12 eine Querschnittsschwächung in Form einer in Spaltebene verlaufenden Querbohrung 13 vorgesehen. Eine weitere Querschnittsschwächung befindet sich im Bereich der Anbindung der Schenkel 5 an den Schaft 2. Diese Querschnittsschwächung wird durch zwei rechtwinklig zur Spaltebene verlaufende Kerben 14 gebildet.

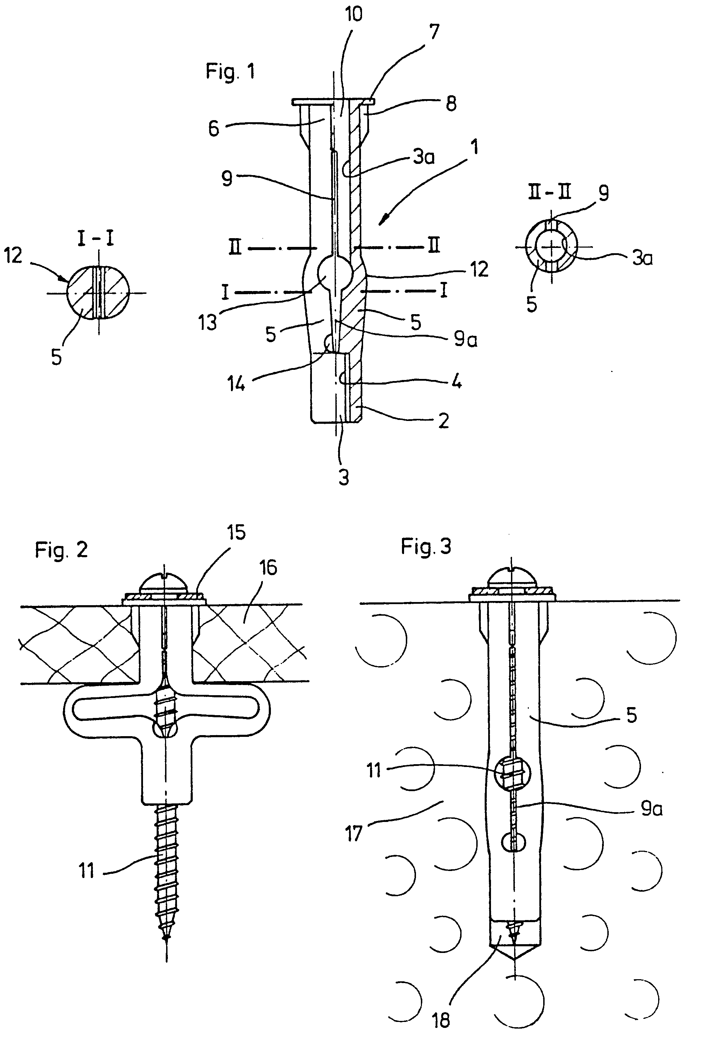

Bei der Befestigung eines Gegenstandes 15 an eine Platte 16 gemäss Figur 2 wird durch Eindrehen der Befestigungsschraube 11 in die Längsbohrung 3 des Schaftes 2 der Schaft zu der Rückseite der Platte 16 hingezogen. Dabei knicken die Schenkel 5 an der Knickstelle radial aus und falten sich axial zusammen. Es entsteht dabei an der Rückseite der Platte ein grossflächiges Gegenlager, das auch in weichen und porösen Platten beispielsweise in Gipskartonplatten hohe Haltewerte erlaubt.

Figur 3 zeigt die Verankerung des Dübel in einem Vollbaustoff 17. Beim Eintreiben des Dübels in das dem Schaft- und Kopfteildurchmesser entsprechende Bohrloch 18 werden die beiden Schenkel 5 aufgrund ihrer Verdickung zusammengedrückt, so dass der Spalt 9a noch weiter verengt wird. Beim Eindrehen der Befestigungsschraube 11 in diese durch den Spalt 9a gebildete Verengung erfolgt eine Verkeilung des Dübelmaterials im Bohrloch.

**Patentansprüche**

1. Dübel für Befestigungen an Platten, Hohlwänden und dgl. einerseits und Vollbaustoffen andererseits, bestehend aus einem eine Längsbohrung mit Innengewinde oder Innenrippen versehenen Schaft, sowie zwei davon ausgehenden Schenkel, die über ein mit einem Flansch und Drehsicherungsmittel versehenen, ebenfalls eine Längsbohrung aufweisenden Kopfteil zusammengehalten sind, dadurch gekennzeichnet, dass die beiden zueinander weisenden Flächen der Schenkel in Fortsetzung der Längsbohrung des Kopfteiles mindestens über die Hälfte der Schenkellänge mit Längsrillen versehen sind, und dass sich daran ein Spalt anschliesst, dessen lichte Weite geringer ist als die lichte Weite der Längsbohrung im Schaft.

2. Dübel nach Anspruch 1, dadurch gekennzeichnet, dass die Querschnittskontur der beiden Schenkel im Bereich des Spaltanfanges eine Ellipse bildet, die zum Schaft hin in einen Kreisquerschnitt übergeht.

3. Dübel nach Anspruch 1, dadurch gekennzeichnet, dass vom Kopfteil aus gesehen, zwischen dem Ende der Längsrillen und dem Spaltanfang eine in Spaltebene verlaufende Querschnittsschwächung, vorzugsweise in Form einer Querbohrung, angeordnet ist.

4. Dübel nach Anspruch 1, dadurch gekennzeichnet, dass im Bereich der Anbindung der Schenkel an den Schaft rechtwinklig zur Spaltebene verlaufende, den Querschnitt schwächende Kerben angeordnet sind.

5. Dübel nach Anspruch 1, dadurch gekennzeichnet, dass der Spalt sich V-förmig zum Schaft hin verengt.

**Claims**

1. Plug for fastenings to panels, cavity walls and the like on the one hand and to solid building materials on the other, comprising a shaft provided with a longitudinal bore having an internal thread or internal ribs, and two legs emerging from the shaft that are held together by a head piece provided with a flange, with means for securing it against rotation and also with a longitudinal bore, characterised in that the two surfaces of the legs facing each other are provided, over at least half the length of the legs, with longitudinal grooves, as an extension of the longitudinal bore in the head piece, and that these are followed by a gap, the inside diameter of which is smaller than the inside diameter of the longitudinal bore in the shaft.

2. Plug according to claim 1, characterised in that the contour of the cross-section of the two legs in the region of the start of the gap forms an ellipse which develops into a circular cross-section towards the shaft.

3. Plug according to claim 1, characterised in that a weakening of the cross-section, preferably in the form of a transverse bore, extending in the plane of the gap is arranged between the end of the longitudinal grooves and the start of the gap, as seen from the head piece.

4. Plug according to claim 1, characterised in that notches that weaken the cross-section are arranged in the region of the connection of the legs to the shaft, extending at right-angles to the plane of the gap.

5. Plug according to claim 1, characterised in that the gap narrows in a V-shape towards the shaft.

## Revendications

1. Cheville destinée d'une part à des fixations sur des plaques, sur des parois creuses et sur des supports similaires, et d'autre part sur des matériaux de construction pleins, cette cheville se composant d'un fût muni d'un alésage longitudinal avec filetage intérieur ou nervures intérieures, ainsi que de deux branches partant de celui-ci, qui sont maintenues ensemble par une partie formant tête munie d'une embase et d'un moyen anti-rotation et en outre présentant un alésage longitudinal, cheville caractérisée en ce que les deux surfaces, tournées l'une vers l'autre, des branches sont munies, sans le prolongement de l'alésage longitudinal de la partie formant tête, de nervures longitudinales au moins sur la moitié de la longueur des branches, et en ce qu'une fente y fait suite, dont la largeur libre est plus petite que la largeur libre de l'alésage longitudinal pratiqué dans le fût.

2. Cheville selon la revendication 1, caractérisée en ce que le contour de la section transversale des deux branches dans la zone du début de la fente forme une ellipse qui se transforme en une section circulaire en direction du fût.

3. Cheville selon la revendication 1, caractérisé en ce que, vu de la partie formant tête, un affaiblissement de la section transversale, de préférence sous forme d'un trou transversal, est disposé entre l'extrémité des nervures longitudinales et le début de la fente, en s'étendant dans la plan de la fente.

4. Cheville selon la revendication 1, caractérisée en ce que, dans la zone du raccordement des branches au fût, sont disposées des encoches d'affaiblissement de la section transversale, qui s'étendent perpendiculairement au plan de la fente.

5. Cheville selon la revendication 1, caractérisée ne ce que la fente se rétrécit en forme de V en direction du fût.

Fig. 1

I-I

II-II

Fig. 2

Fig. 3